Europäisches Patentamt

European Patent Office

Office européen des brevets

(11) Veröffentlichungsnummer: **0 311 854**

**A1**

## (12) EUROPÄISCHE PATENTANMELDUNG

(21) Anmeldenummer: 88116188.9

(22) Anmeldetag: 30.09.88

(51) Int. Cl.⁴: **G11B 5/31 , G11B 5/245**

(30) Priorität: 16.10.87 DE 3735147

(43) Veröffentlichungstag der Anmeldung:
19.04.89 Patentblatt 89/16

(84) Benannte Vertragsstaaten:
AT CH DE FR GB IT LI NL

(71) Anmelder: **Siemens Aktiengesellschaft Berlin
und München
Wittelsbacherplatz 2
D-8000 München 2(DE)**

(72) Erfinder: **Schewe, Herbert, Dr.
Haydnstrasse 58
D-8522 Herzogenaurach(DE)**

(54) **Dünnfilm-Magnetkopf mit schichtweisem Aufbau zur senkrechten Magnetisierung.**

(57) Der in Dünnfilmtechnik aufgebaute, über ein senkrecht zu magnetisierendes Aufzeichnungsmedium zu führende Magnetkopf enthält einen ringkopfähnlichen magnetischen Leitkörper mit einem ersten und einem zweiten Magnetschenkel, die hintereinander angeordnete Magnetpole ausbilden. Dabei ist mit dem ersten Magnetschenkel die Schreibfunktion und mit beiden Magnetschenkeln die Lesefunktion auszuüben. Dieser Magnetkopf soll dahingehend ausgestaltet sein, daß ein Mitlesen von Datenresten im Randbereich von Datenspuren verhindert wird. Hierzu ist erfindungsgemäß vorgesehen, daß der Magnetpol (P1) des ersten Magnetschenkels (9) eine größere Breite (b1) als der Magnetpol (P2) des zweiten Magnetschenkels (10) hat, wobei beide Magnetschenkel (9, 10) mindestens in ihren an den jeweiligen Magnetpol (P1 bzw. P2) angrenzenden Endbereichen (11 bzw. 12) zumindest weitgehend aus demselben Material aufgebaut sind.

FIG 2

# Dünnfilm-Magnetkopf mit schichtweisem Aufbau zur senkrechten Magnetisierung

Die Erfindung bezieht sich auf einen Dünnfilm-Magnetkopf mit schichtweisem Aufbau, welcher Magnetkopf

a) über einer Datenspur eines senkrecht (vertikal) zu magnetisierenden Aufzeichnungsmediums zu führen ist und

b) einen den magnetischen Fluß führenden, ringkopfähnlichen magnetischen Leitkörper mit einem ersten und einem zweiten Magnetschenkel enthält,

wobei diese Magnetschenkel

- dem Aufzeichnungsmedium zugewandte Magnetpole ausbilden, die in (relativer) Bewegungsrichtung des Magnetkopfes bezüglich des Aufzeichnungsmediums gesehen hintereinander angeordnet und durch einen Spalt vorbestimmter Weite getrennt sind,

sowie

- außerhalb des Polbereichs einen Zwischenraum begrenzen, durch welchen sich die Windungen einer Schreib- und/oder Lesespulenwicklung erstrecken,

und wobei mit dem ersten Magnetschenkel zumindest weitgehend allein die Schreibfunktion, hingegen mit beiden Magnetschenkeln die Lesefunktion auszuüben ist.

Ein entsprechender Magnetkopf ist z.B. aus der EP-A-0 232 505 zu entnehmen.

Das Prinzip einer senkrechten (vertikalen) Magnetisierung zur Speicherung von Daten in entsprechenden, insbesondere platten förmigen Aufzeichnungsmedien ist allgemein bekannt (vgl. z.B. "IEEE Transactions on Magnetics", Vol. MAG-16, No. 1, Januar 1980, Seiten 71 bis 76 oder Vol. MAG-20, No. 5, September 1984, Seiten 657 bis 662 und 675 bis 680). Für diese Magnetisierungsart zu verwendende Magnetköpfe weisen im allgemeinen zur Führung des magnetischen Flusses einen Leitkörper aus magnetischem Material auf, der mit seinen beiden Magnetschenkeln eine Gestalt ähnlich einer Ringform hat. Diese Magnetschenkel bilden an ihren dem Aufzeichnungsmedium zugewandten Enden Magnetpole aus, die in relativer Bewegungsrichtung des Kopfes gesehen hintereinander angeordnet sind, wobei ein Spalt vorbestimmter Weite ausgebildet ist. Außerdem begrenzen die Magnetschenkel einen Zwischenraum, der in einem Teilbereich des magnetischen Leitkörpers aufgrund einer Vergrößerung ihres gegenseitigen Abstandes entsprechend erweitert ist. Durch diesen Zwischenraum erstrecken sich die Windungen mindestens einer Schreib- und/oder Lesespulenwicklung.

Einen entsprechenden Aufbau zeigt auch der aus der vorstehend genannten EP-A bekannte Magnetkopf. Dieser Magnetkopf ist so ausgestaltet, daß er quasi als Einzelpol-Kopf praktisch nur mit einem einzigen seiner Magnetschenkel gemäß dem Prinzip der senkrechten Magnetisierung schreibt. Hierzu sind seine beiden Magnetschenkel so ausgebildet, daß sie während der Schreibfunktion unterschiedliches magnetisches Verhalten zeigen. Hingegen wird die Lesefunktion mit beiden Magnetschenkeln ausgeübt.

Die Herstellungstechnologie für bekannte, longitudinal zu magnetisierende Magnetköpfe mit schrittweisem Aufbau der Schichten ihrer einzelnen Magnetschenkel und jeweils anschließender Mikrostrukturierung kann es mit sich bringen, daß der zuerst auf einem im allgemeinen nicht-magnetischen Substrat abgeschiedene (erste) Magnetschenkel im Bereich seines Magnetpoles eine etwas größere Breite quer zur relativen Bewegungsrichtung des Kopfes hat als der Magnetpol des später abgeschiedenen zweiten Magnetschenkels. Wird nun mit einem derartigen (longitudinalen) Magnetkopf geschrieben, so zeigt sich, daß hierfür im wesentlichen die Breite des (schmäleren) Magnetpols des zweiten Magnetschenkels wirksam ist. Beim Lesen bewirken jedoch die magnetischen Randfelder zwischen den beiden Magnetpolen einen flacheren Abfall des Lesefeldprofiles zum Rande hin. Es kann deshalb auch von einem Mitlesen des rechten und linken Randbereiches des breiteren Magnetpoles, d.h. des über den schmäleren Magnetpol des zweiten Magnetschenkels seitlich hinausreichenden Randes des breiteren Magnetpoles gesprochen werden.

Für Datenspeicheranlagen mit hohen Datendichten, wie sie insbesondere für das senkrechte Magnetisierungsprinzip angestrebt werden, sind Spurführungssysteme erforderlich, die ein Führen der entsprechenden Magnetköpfe über den Datenspuren mit hoher Spurhaltegenauigkeit sf von z.B. weniger als ± 0,5 µm gewährleisten. Entsprechende Spurführungssysteme sind z.B. als "Dedicated Servo Systems" bekannt. Man muß jedoch auch das mit entsprechenden Toleranzen auszuführende Beschreiben von Nachbarspuren berücksichtigen, so daß sich dann größere Spurführungsfehler als die genannten ± 0,5 µm ergeben. Geht man nun von den erwähnten Magnetisierungsverhältnissen bei bekannten longitudinal magnetisierenden Magnetköpfen mit unterschiedlicher Breite ihrer Magnetpole aus, so hat ein Spurführungsfehler des genannten Servosystems in der angedeuteten Größenordnung zur Folge, daß nach mehrmaligem Überschreiben einer Datenspur die Seitenränder der Datenspuren unscharf werden, quasi ausfransen. Im Extremfall wird sogar der vielfach auch als "Rasen" bezeichnete, z.B. 3 bis 4 μm breite Abstandsbereich zwischen benachbarten Datenspuren zumindest stellenweise vollständig über schrieben. Dies bedeutet, daß im Randbereich der Datenspuren inselförmig Datenreste aus unterschiedlichen Überschreibungsläufen bestehen bleiben können, die beim Lesen dieser Spur wegen der nicht genügend unterdrückten Lesefähigkeit der Randbereiche des breiteren Magnetpoles des ersten Magnetschenkels zu Lesefehlern führen können.

Aufgrund dieser Schwierigkeiten sind kombinierte Magnetköpfe entwickelt worden, die beim Schreiben induktiv eine breite Spur festlegen und beim Lesen mit einem integrierten, schmäleren magnetoresistiven Sensor eine Spur mit entsprechend geringerer Breite lesen (vgl. "Electronics", 14. Mai 1987, Seiten 31 und 32). Der für die Herstellung entsprechender hochkomplexer Köpfe erforderliche Aufwand ist jedoch ganz erheblich. Außerdem kann die bekannte Empfindlichkeit magnetoresistiver Köpfe gegen magnetische Einstreuungen zu Problemen führen.

Aufgabe der vorliegenden Erfindung ist es deshalb, den Dünnfilm-Magnetkopf der eingangs genannten Art dahingehend auszugestalten, daß eine Entstehung der erwähnten inselförmigen Datenreste vermieden bzw. ihr Mitlesen verhindert wird.

Diese Aufgabe wird erfindungsgemäß dadurch gelöst, daß der Magnetpol des ersten Magnetschenkels, welcher bezüglich der (relativen) Bewegungsrichtung gesehen der vorlaufende Magnetschenkel des Magnetkopfes ist, eine größere Breite quer zur Bewegungsrichtung hat als der Magnetpol des zweiten Magnetschenkels, wobei beide Magnetschenkel mindestens in ihren an den jeweiligen Magnetpol angrenzenden Endbereichen zumindest weitgehend aus demselben Material aufgebaut sind.

Der erfindungsgemäße Magnetkopf für das senkrechte (vertikale) Magnetisierungsprinzip geht von einem an sich bekannten Konzept aus, wonach der Magnetkopf beim Schreiben ähnlich wie ein Einzelpol-Kopf wirkt und beim Lesen die Charakteristik eines Dünnfilm-Ringkopfes aufweist (vgl. z.B. die genannte EP-A-0 232 505). Durch die Möglichkeit, beim Schreiben und Lesen verschiedene Bereiche der Magnetpole zu aktivieren, erlaubt der erfindungsgemäße Magnetkopf durch Wahl einer großen Polbreite des ersten (vorlaufenden) Magnetpols eine breite Spur zu beschreiben und durch Wahl einer geringeren Polbreite seines zweiten (ablaufenden) Magnetpols eine schmälere Spur zu lesen. Diese besondere Eigenschaft des erfindungsgemäßen Magnetkopfes steht im Gegensatz zu den vorstehend geschilderten Erfahrungen mit Dünnfilm-Magnetköpfen für eine longitudinale Aufzeichnung. Bei diesen Köpfen ergibt bekanntlich ein breiterer vorlaufender Magnetpol und ein schmälerer nachlaufender Magnetpol eine Lesespur, die keineswegs schmäler als die Schreibspur ist. Die mit der erfindungsgemäßen Ausgestaltung des Dünnfilm-Magnetkopfes verbundenen Vorteile sind insbesondere darin zu sehen, daß Unschärfen (Ausfransungen) der Schreibspurränder aufgrund unvermeidlicher Toleranzen eines stets zur Spurführung des Magnetkopfes erforderlichen Servo-Systems keine wesentliche Bedeutung mehr haben, da diese Ränder beim Lesen nicht mehr miterfaßt werden.

Vorteilhafte Ausgestaltungen des erfindungsgemäßen Dünnfilm-Magnetkopfes gehen aus den Unteransprüchen hervor.

Zur weiteren Erläuterung der Erfindung wird nachfolgend auf die schematische Zeichnung Bezug genommen. Dabei zeigt Figur 1 einen erfindungsgemäßen Magnetkopf, dessen Magnetpole in Figur 2 näher veranschaulicht sind. In Figur 3 sind die Magnetpole eines bekannten Magnetkopfes nach dem longitudinalen Magnetisierungsprinzip dargestellt. Figur 4 zeigt die Abhängigkeit der mit einem erfindungsgemäßen Magnetkopf zu erzeugenden Schreib- und Lesespurbreiten von der Schreibfrequenz, während aus Figur 5 eine maximale Spuraufteilung für einen Magnetkopf nach der Erfindung hervorgeht. In den Figuren sind übereinstimmende Teile mit den gleichen Bezugszeichen versehen.

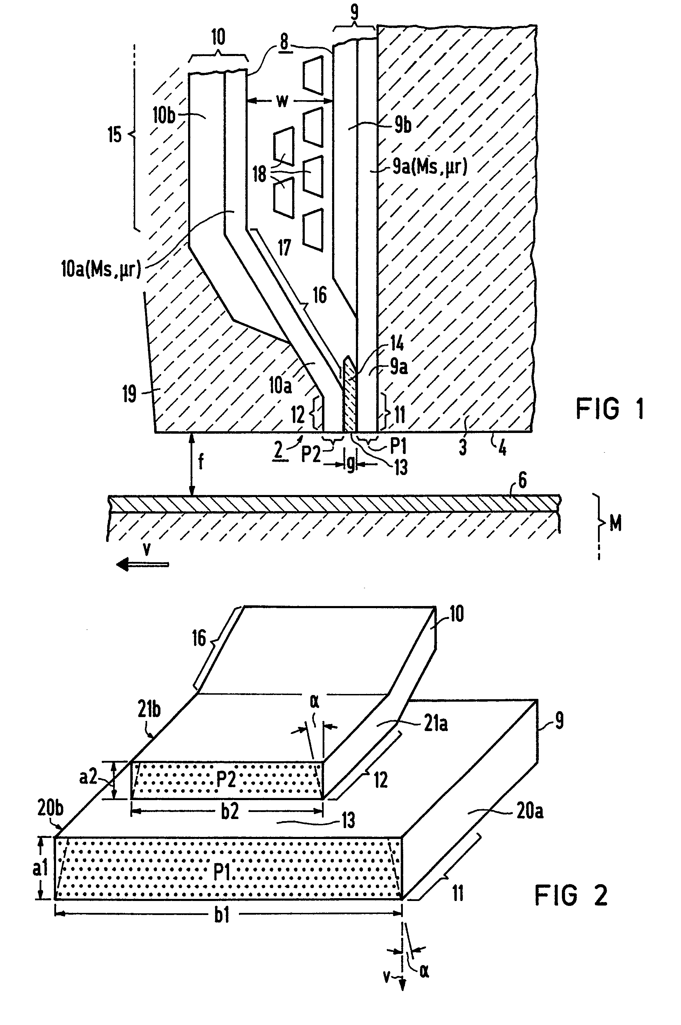

Bei dem in Figur 1 nur teilweise als Längsschnitt dargestellten Magnetkopf wird von an sich bekannten, ringkopfähnlichen Ausführungsformen mit schichtweisem Aufbau ausgegangen, wie sie für das Prinzip einer senkrechten (vertikalen) Magnetisierung entwickelt worden sind (vgl. z.B. die eingangs genannte EP-A). Mit dem allgemein mit 2 bezeichneten Magnetkopf soll sowohl eine Schreib- als auch eine Lese-Funktion nach diesem Prinzip auszuüben sein. Der Kopf befindet sich auf der rückwärtigen Flachseite eines nicht-magnetischen Substrates 3, das als aerodynamischer Flugkörper mit Flugkufen gestaltet ist (vgl. z.B. EP-A-0 137 051). Der Magnetkopf ist somit aerodynamisch über einem an sich bekannten Aufzeichnungsmedium M in geringer Flughöhe f zu führen, wobei die relative Bewegungsrichtung des Aufzeichnungsmediums bezüglich des Magnetkopfes durch eine mit v bezeichnete gepfeilte Linie angedeutet ist. Die sich zwischen der zu mindestens einer Flugkufe gestalteten, dem Aufzeichnungsmedium M zugewandten Unterseite 4 des Kopfes 2 und dem Aufzeichnungsmedium einstellende Flughöhe f beträgt beispielsweise nur einige Zehntel μm. Das Aufzeichnungsmedium M, insbesondere eine Magnetspeicherplatte, weist eine Speicherschicht 6 auf, die vertikal (senkrecht) orientiert ist und beispielsweise aus einer CoCr-Legierung besteht.

Der Magnetkopf 2 enthält einen den Magnetfluß führenden, ringkopfähnlichen magnetischen Leitkörper 8 mit einem ersten Magnetschenkel 9 und einem zweiten Magnetschenkel 10, die insbesondere in bekannter Weise lamelliert aus mehreren dünnen Schichten aufgebaut sein können. Diese Schenkel sind weitgehend und insbesondere in ihren dem Aufzeichnungsmedium M zugewandten, Magnetpole P1 bzw. P2 ausbildenden Endbereichen 11 bzw. 12 zumindest annähernd senkrecht zur Oberfläche des Aufzeichnungsmediums ausgerichtet. Unter den Endbereichen wird dabei jeweils das Endstück eines Magnetschenkels verstanden, das zumindest weitgehend einheitliche Querausdehnung bzw. Dicke aufweist und zu dem anderen Endstück annähernd parallel verläuft. Die Endbereiche 11 und 12 bzw. die Pole P1 und P2 sind durch einen Luftspalt 13 räumlich getrennt, der vorteilhaft eine geringe longitudinale, d.h. in Bewegungsrichtung v weisende Weite g unter 1 μm aufweist.

Dieser Luftspalt 13 ist durch eine sehr harte, in der Figur nur angedeutete Spaltschicht 14 z.B. aus $Al_2O_3$ oder $SiO_2$ ausgefüllt. In einem mittleren Bereich 15 des magnetischen Leitkörpers 8 ist der Abstand zwischen den beiden Magnetschenkeln 9 und 10 gegenüber der Spaltweite g erweitert, indem z.B. der hinsichtlich der Bewegungsrichtung v rückwärtige, d.h. nachlaufende Magnetschenkel 10 auf eine größere Weite w bezüglich des vorlaufenden, eben ausgebildeten und dem Substrat 3 zugewandten Magnetschenkels 9 führt. Außerhalb dieses Bereichs 15 ist auf der dem Aufzeichnungsmedium M abgewandten, in der Figur nicht dargestellten Seite des Leitkörpers 8 der Magnetschenkel 10 in bekannter Weise in einem Verbindungsbereich an den Magnetschenkel 9 angefügt, so daß sich damit die ringkopfähnliche Gestalt des Leitkörpers 8 ergibt. Durch den zwischen den beiden Magnetschenkeln 9 und 10 in dem mittleren Bereich 15 ausgebildeten Zwischenraum 17 erstreckt sich mindestens eine flache Spulenwicklung 18, die sowohl als Schreib- als auch als Lesespule dient.

Die beiden Magnetschenkel 9 und 10 des Magnetkopfes 2 sind zumindest in ihren Endbereichen 11 und 12 jeweils durch mindestens eine magnetische Schicht 9a bzw. 10a ausgebildet. Außerhalb dieser Endbereiche sind die beiden Magnetschenkel 9 und 10 noch mit mindestens einer Verstärkungsschicht 9b bzw. 10b versehen. Alle Schichten der Magnetschenkel bestehen vorteilhaft zumindest weitgehend aus dem gleichen Material mit einer vorbestimmten Sättigungsmagnetisierung Ms und einer vorbestimmten reversiblen Permeabilität μr. Dabei kann die reversible Permeabilität in dem ansteigenden Bereich 16 des Magnetschenkels 10 wegen der dort im allgemeinen unterschiedlichen Sputterbedingungen reduziert sein. Geeignete Materialien sind insbesondere spezielle NiFe-Legierungen ("Permalloy"). Außerdem ist in der Figur noch eine isolierende äußere Schutzschicht 19 des Magnetkopfes, die beispielsweise aus $Al_2O_3$ bestehen kann, angedeutet.

Gemäß der Erfindung sollen nun die Magnetschenkel 9 und 10 zumindest in ihren Endbereichen 11 und 12 unterschiedlich breit ausgebildet sein. Diese Ausbildung geht insbesondere aus der in Figur 2 gezeigten Schrägansicht auf die Polflächen (Polspiegel) der Pole P1 bzw. P2 dieser Magnetschenkel hervor. Dabei soll der dem Substrat 3 zugewandte, vorlaufende Magnetschenkel 9 die größere Breite b1 aufweisen, während der durch den Spalt 13 von ihm getrennte nachlaufende Magnetschenkel 10 schmäler ist und die Breite b2 hat. Die quer zur relativen Bewegungsrichtung v zu messenden Breiten b1 und b2 werden entsprechend der Spurfolgegenauigkeit des für den Magnetkopf eingesetzten Servosystems so gewählt, daß der Magnetschenkel 10 die Randkurve einer aktuell geschriebenen Datenspur nicht berührt.

Wie aus Figur 2 ferner hervorgeht, ist die Fläche des zumindest weitgehend allein schreibenden Poles P1 größer als die Fläche des nachlaufenden Poles P2. Die in Bewegungsrichtung v zu messende Dicke bzw. Ausdehnung a1 des Poles P1 kann dabei größer als die entsprechende Ausdehnung a2 des Poles P2 gewählt sein. Eine derartige Bemessung der Dicken ist jedoch im Hinblick auf die Einzelpol-Eigenschaft des Kopfes nicht unbedingt erforderlich. Deshalb kann a2 auch ungefähr gleich a1 sein.

In Figur 2 sind darüber hinaus die schmäleren Seitenflächen der beiden Magnetschenkel 9 und 10 in deren die Magnetpole P1 und P2 ausbildenden Endbereichen 11 bzw. 12 mit 20a, 20b bzw. 21a, 21b bezeichnet. Gemäß dem in der Figur gezeigten Ausführungsbeispiel wurde von dem als vorteilhaft anzusehenden Fall ausgegangen, daß diese Seitenflächen 20a, 20b, 21a, 21b mit der Bewegungsrichtung v einen (Neigungs-)Winkel α einschließen, der möglichst klein und vorzugsweise zumindest annähernd null ist. Wie jedoch in der Figur durch gestrichelte Linien angedeutet sein soll, können gegebenenfalls, z.B. herstellungsbedingt, auch Seitenflächen vorgesehen werden, die schräg bzgl. der Bewegungsrichtung v ausgerichtet sind.

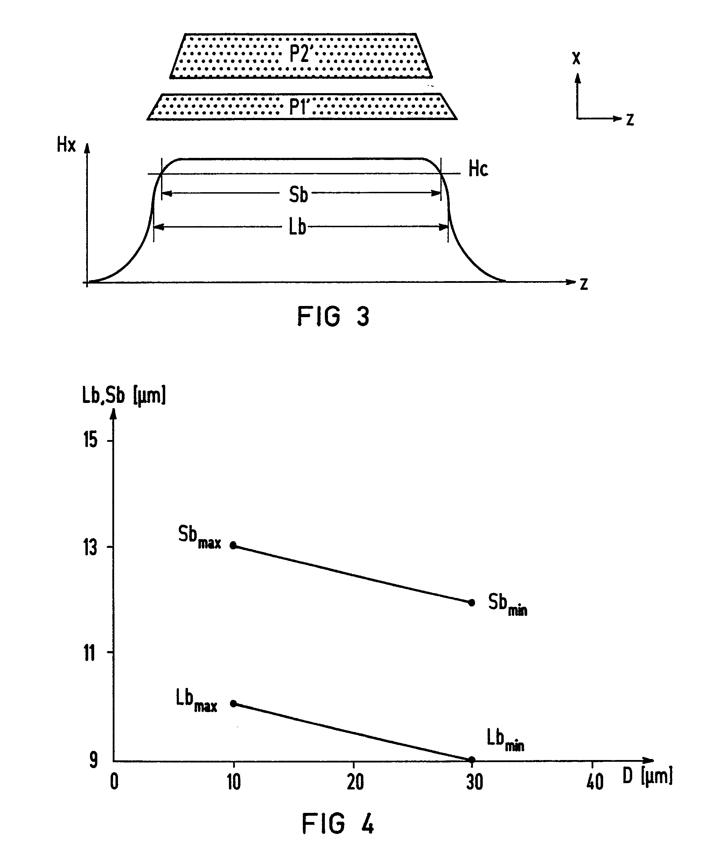

Aufgrund der gewählten Breitenverhältnisse wird mit dem erfindungsgemäßen Magnetkopf praktisch nur mit seinem breiteren vorlaufenden Magnetschenkel 9 geschrieben, während durch die Wahl der geringeren Breite b2 für den nachlaufenden Magnetschenkel 10 eine schmälere Spur mit beiden Schenkeln 9 und 10 ausgelesen wird. Diese Eigenschaft des erfindungsgemäßen Magnetkopfes ist im Hinblick auf die Erfahrungen mit Magnetköpfen für eine longitudinale Magnetisierung überraschend. Denn im longitudinalen Fall führt auch ein breiterer vorlaufender Magnetpol und ein schmälerer nachlaufender Magnetpol zu einer Schreibspur, die schmäler als die Lesespur ist. Zur Veranschaulichung dieser Tatsache wird auf die Figur 3 verwiesen, aus der eine Ansicht auf die beiden Polflächen P1$'$ und P2$'$ eines entsprechenden Magnetkopfes zu entnehmen ist. Dabei wurde vorausgesetzt, daß sich aufgrund der gewählten Ätztechnik zur Strukturierung der beiden Magnetschenkel der nachlaufende Magnetschenkel mit seinem Pol P2$'$ eine in z-Richtung quer zur Bewegungsrichtung x zu messende Breite aufweist, die herstellungsbedingt etwas kleiner ist als die entsprechend zu messende Breite des vorlaufenden Magnetschenkels mit dem Pol P1$'$. Die Figur 3 zeigt ferner in einem Diagramm die Feldstärke Hx des von den beiden Magnetpolen erzeugten Magnetfeldes in Abhängigkeit von der Querausdehnung in z-Richtung des Magnetkopfes. Die sich er gebende, in Ordinatenrichtung aufgetragene Feldstärke Hx ist dabei an der Oberfläche einer entsprechenden, longitudinal zu magnetisierender Aufzeichnungsplatte in Bewegungsrichtung x gemessen. Ein solcher Magnetkopf schreibt nun mit dem ablaufenden Pol P2$'$ sein mit Hilfe des Luftspaltes erzeugtes longitudinales Hc-Profil, wobei die Speicherschicht der Platte bis zu der Koerzitivfeldstärke Hc magnetisiert wird. Demgegenüber tastet der gleiche Kopf beim Lesen mit seiner gesamten, seitlichen Feldcharakteristik die Magnetisierungsverteilung in der Platte ab. Dies hat zur Folge, daß die Lesebreite Lb praktisch größer ist als die durch die Koerzitivfeldstärke Hc festgelegte Schreibbreite Sb.

Eine Meßmethode zur Bestimmung von Schreib- und Lesebreiten von Magnetköpfen ist z.B. aus der Veröffentlichung "IEEE Transactions on Magnetics", Vol. MAG-20, No. 4, Juli 1984, Seiten 528 bis 541 bekannt. Das dieser Methode zugrundeliegende Prinzip besteht im wesentlichen darin, daß man zwei Spuren mit verschiedener Breite Sb beschreibt. Diese Spuren liest man dann mit einem Magnetkopf aus, indem man diesen Kopf zu den beschriebenen Spuren mit verschiedenen Abständen bezüglich der Spurmitte seitlich versetzt führt und die jeweilige Lesespannung mißt. Aus den so zu gewinnenden Spannungsprofilen lassen sich dann zwei Größen ermitteln, die der Breite der Schreibspur bzw. der Lesespur entsprechen. Eine eindeutige Zuordnung dieser beiden Größen ist möglich, wenn man eine geschriebene Spur am Rand soweit löscht, daß die Schreibbreite Sb kleiner als die Lesebreite Lb ist.

Diese bekannte Methode kann beispielsweise zur Bestimmung der Schreib- und Lesespurbreite für einen Magnetkopf herangezogen werden, der gemäß dem longitudinalen Magnetisierungsprinzip über einem entsprechenden Aufzeichnungsmedium zu führen ist und dessen vorlaufender Magnetschenkel eine größere Polbreite als sein nachlaufender Magnetschenkel hat. Es läßt sich dann ohne weiteres feststellen, daß in diesem Fall für den Magnetkopf die Lesebreite größer ist als die Schreibbreite.

Betrachtet man andererseits einen Magnetkopf nach der Erfindung über einem vertikal zu magnetisierenden Speichermedium, so ergibt die entsprechende Auswertung hingegen ein gegensätzliches Ergebnis. Dann wird nämlich eine Spur beschrieben, die breiter als die ausgelesene Spur ist. Dieser Sachverhalt ist auch unabhängig davon, ob man für das Speichermedium eine Speicherschicht z.B. aus CoCr mit oder ohne weichmagnetischer Unterlage z.B. aus einer NiFe-Legierung (vgl. z.B. "IEEE Transactions on Magnetics", Vol. MAG-15, No. 6, November 1979, Seiten 1456 bis 1458) vorsieht. Man kann also feststellen, daß es mit einem erfindungsgemäßen Magnetkopf über einem vertikal zu magnetisierenden Speichermedium durch geeignete Wahl der Polbreiten der Pole P1 und P2 möglich ist, breit zu schreiben und schmal zu lesen.

Dieser Sachverhalt ist aus dem Diagramm der Figur 4 abzulesen. In diesem Diagramm ist auf der Ordinate die Spurbreite Sb bzw. Lb aufgetragen, während auf der Abszisse die Flußwechseldichte D angegeben ist. Den beiden eingetragenen Meßkurven Sb und Lb lag dabei ein gemäß den Figuren 1 und 2 aufgebauter Magnetkopf zugrunde, dessen vorlaufender Magnetschenkel einen Magnetpol P1 mit einer Polbreite b1 von etwa 13 $\mu$m und dessen nachlaufender Magnetschenkel einen Magnetpol P2 mit einer Polbreite b2 von etwa 9 $\mu$m aufwies. Der Kopf hatte außerdem im Polbereich noch die folgenden Abmessungen: a1 = 0,8 $\mu$m; a2 = 0,6 $\mu$m; g = 0,2 $\mu$m. Beide Magnetschenkel des Kopfes bestanden aus mehreren Schichten aus einer speziellen NiFe-Legierung (Permalloy). Dieser Kopf wurde über eine Magnetspeicherplatte geführt, die eine Speicherschicht 6 aus CoCr auf einer weichmagnetischen NiFe-Unterlage besaß. Die Dicke der CoCr-Schicht betrug 0,4 $\mu$m, die Dicke der NiFe-Schicht 0,5 $\mu$m. Diese CoCr/NiFe-Doppelschicht wies folgende magnetische Parameter auf: Koerzitivfeldstärke Hc = 40 kA/m, Sättigungsmagnetisierung Ms = 250 kA/m, Anisotropiefeldstärke Hk = 350 kA/m . Wie sich deutlich aus dem Diagramm entnehmen läßt, ist für diesen Magnetkopf die Schreibspurbreite Sb erheblich größer als die Lesespurbreite Lb bei den für ein Datenspeichersystem mit hoher Speicherdichte zu realisierenden Flußwechseldichten D. Als maximale Schreib- bzw. Lesebreite Sb$_{max}$ bzw. Lb$_{max}$ wurde 13 $\mu$m bzw. 10 $\mu$m erhalten. Die minimale Schreib- bzw. Lesebreite Sb$_{min}$ bzw. Lb$_{min}$ betrug 12 $\mu$m bzw. 9 $\mu$m.

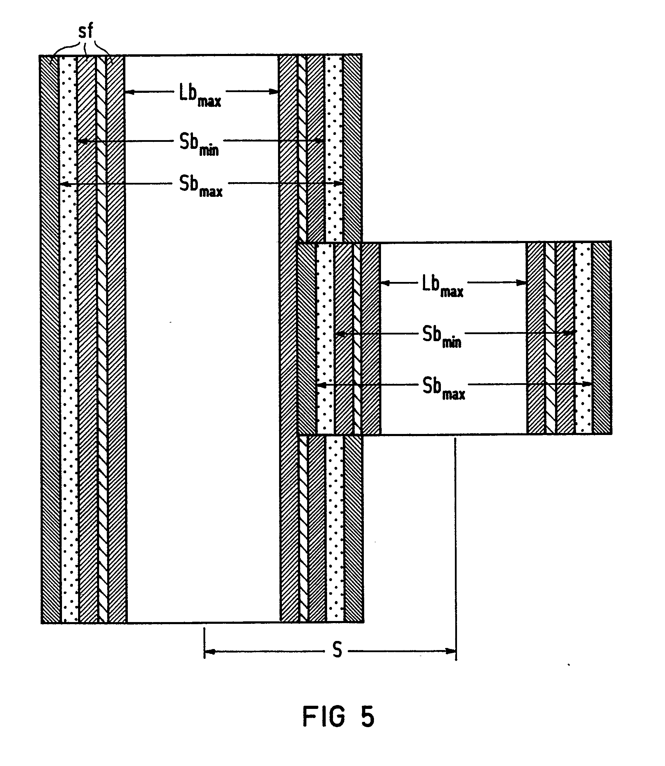

Aufgrund der Tatsache, daß mit dem erfindungsgemäßen Magnetkopf eine Schreibspur erzeugt wird, die breiter als die Lesespur ist, läßt sich eine verhältnismäßig dichte Spuraufteilung auf einem entsprechenden Aufzeichnungsmedium erreichen. Diese Spuraufteilung ist schematisch in Figur 5 als Aufsicht veranschaulicht. Der kritische Fall, der bei ideal scharf begrenzten Schreib- und Lesespurbreiten gerade noch kein Nebenlesen ergibt, ist in dieser Figur zugrundegelegt. Dabei bedeuten $Lb_{min}$ bzw. $Lb_{max}$ und $Sb_{min}$ bzw. $Sb_{max}$ die minimalen bzw. maximalen Lese- und Schreibspurbreiten entsprechend dem konkreten Ausführungsbeispiel nach Figur 4, während sf* die bei einer Spurverfolgung unvermeidbare maximale mechanische Toleranz (= maximaler Spurführungsfehler) des Antriebs des Aufzeichnungsmdiums und der Magnetkopfführung ist. Hierbei muß folgende Bedingung erfüllt sein:

$$Sb_{min} - Lb_{max} > 4 \times sf,$$

wobei sf die Positioniergenauigkeit eines Kopfes auf einer einzelnen Spur ist. Bedenkt man, daß $Sb_{max} \approx b1$ und $Lb_{max} \approx b2$ sind, so kann man dann aus dem Abfall der Kurven nach Figur 4 $Sb_{min}$ bestimmen, um die vorstehende Bedingung zu erfüllen.

Mit dieser Bedingung erhält man für das minimale Spurraster S:

$$S = (Sb_{max} + Lb_{max})/2 + 2 \times sf^*.$$

In der Regel ist nämlich die Positioniergenauigkeit sf auf einer bestimmten Spur besser als die Präzision sf*, mit der das Spurraster eingehalten werden kann, d.h. es gilt: sf* $\geq$ sf.

Beispiel:

Beträgt die Positioniergenauigkeit eines Antriebs-und Führungssystems, z.B. durch einen Dedicated und Embedded Servo:

sf = sf* = 0,5 $\mu$m,

so erhält man mit den Daten

$Lb_{min}$ = 9 $\mu$m, $Lb_{max}$ = 10 $\mu$m
$Sb_{min}$ = 12 $\mu$m, $Sb_{max}$ = 13 $\mu$m

für das minimale Spurraster:

S = 12,5 $\mu$m.

Gemäß dem dargestellten Ausführungsbeispiel wurde davon ausgegangen, daß der vorlaufende Magnetschenkel 9 die größere Polbreite b1 hat und mit diesem Schenkel die Schreibfunktion ausgeübt wird. Gegebenenfalls kann jedoch auch der nachlaufende Schenkel der schreibende (mit größerer Polbreite) sein. Dies ist insbesondere dann möglich, wenn der vorlaufende (schmälere) Magnetschenkel im Substrat versenkt angeordnet wird (vgl. z.B. EP-A-0 185 289).

## Ansprüche

1. Dünnfilm-Magnetkopf mit schichtweisem Aufbau, welcher Magnetkopf

a) über einer Datenspur eines senkrecht (vertikal) zu magnetisierenden Aufzeichnungsmediums zu führen ist und

b) einen den magnetischen Fluß führenden, ringkopfähnlichen magnetischen Leitkörper mit einem ersten und einem zweiten Magnetschenkel enthält,

wobei diese Magnetschenkel
- dem Aufzeichnungsmedium zugewandte Magnetpole ausbilden, die in (relativer) Bewegungsrichtung des Magnetkopfes bezüglich des Aufzeichnungsmediums gesehen hintereinander angeordnet und durch einen Spalt vorbestimmter Weite getrennt sind,

sowie
- außerhalb des Polbereichs einen Zwischenraum begrenzen, durch welchen sich die Windungen einer Schreib- und/oder Lesespulenwicklung erstrecken,

und wobei mit dem ersten Magnetschenkel zumindest weitgehend allein die Schreibfunktion, hingegen mit beiden Magnetschenkeln die Lesefunktion auszuüben ist,

**dadurch gekennzeichnet,** daß der Magnetpol (P1) des ersten Magnetschenkels (9), welcher bezüglich der (relativen) Bewegungsrichtung (v) gesehen der vorlaufende Magnetschenkel des Magnetkopfes (2) ist, eine größere Breite (b1) quer zur Bewegungsrichtung (v) hat als der Magnetpol (P2) des zweiten Magnetschenkels (10), wobei beide Magnetschenkel (9, 10) mindestens in ihren an den jeweiligen Magnetpol (P1 bzw. P2) angrenzenden Endbereichen (11 bzw. 12) zumindest weitgehend aus demselben Material aufgebaut sind.

2. Magnetkopf nach Anspruch 1, **dadurch gekenn zeichnet,** daß der Magnetpol (P1) des ersten Magnetschenkels (9) eine Ausdehnung (a1) in Bewegungsrichtung (v) aufweist, die größer als die entsprechende Ausdehnung (a2) des Magnetpols (P2) des zweiten Magnetschenkels (10) oder etwa gleich dieser Ausdehnung (a2) ist.

3. Magnetkopf nach Anspruch 1 oder 2, **dadurch gekennzeichnet,** daß die Breiten (b1, b2) der Magnetpole (P1 bzw. P2) der beiden Magnetschenkel (9 bzw. 10) so gewählt sind, daß in dem Aufzeichnungsmedium (M) Schreib-und Lesespuren zu erzeugen sind, deren Breiten (Sb bzw. Lb) quer zur Bewegungsrichtung (v) die Bedingung erfüllen:

$$Sb_{min} - Lb_{max} > 4 \times sf,$$

wobei $Sb_{min}$ die minimale Schreibspurenbreite, $Lb_{max}$ die maximale Lesespurenbreite und sf der maximale Spurführungsfehler sind.

4. Magnetkopf nach einem der Ansprüche 1 bis 3, **dadurch gekennzeichnet,** daß in den an die Magnetpole (P1, P2) angrenzenden Endbereichen (11, 12) der Magnetschenkel (9, 10) deren schmale Seitenflächen (20a, 20b bzw. 21a, 21b) mit der Bewegungsrichtung (v) einen Winkel ( ) einschließen, der verhältnismäßig klein und vorzugsweise zumindest annähernd null ist.

5. Magnetkopf nach einem der Ansprüche 1 bis 4, **gekennzeichnet** durch eine Anordnung auf einer rückwärtigen Flachseite eines als aerodynamischer Flugkörper gestalteten Substrates (3).

87 P 3397

FIG 1

FIG 2

FIG 3

FIG 4

FIG 5

Europäisches
Patentamt

**EUROPÄISCHER RECHERCHENBERICHT**

Nummer der Anmeldung

EP 88 11 6188

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 575 777 (HOSOKAWA) <br> * Spalte 2, Zeilen 49-52,59-63; Spalte 6, Zeile 60 - Spalte 7, Zeile 36; Spalte 8, Zeile 66 - Spalte 9, Zeile 36; Spalte 8, Zeile 66 - Spalte 9, Zeile 34; Spalte 10, Zeilen 10,49 - Spalte 11, Zeile 56; Spalte 12, Zeile 16 - Spalte 13, Zeile 2; Ansprüche 18,26,28,29; Figuren 5-7,14-16,18,21-23 * | 1,2,4,5 | G 11 B 5/31 <br> G 11 B 5/245 |
| A | --- | 3 | |
| X | PATENT ABSTRACTS OF JAPAN, Band 8, Nr. 192 (P-298)[1629], 4. September 1984; & JP-A-59 79 411 (SUWA SEIKOSHA K.K.) 08-05-1984 <br> * Zusammenfassung * | 1 | |
| A | --- | 3 | |
| X | PATENT ABSTRACTS OF JAPAN, Band 10, Nr. 147 (P-460)[2204], 29. Mai 1986; & JP-A-61 904 (TOKYO DENKI K.K.) 06-01-1986 <br> --- | 1,4 | **RECHERCHIERTE SACHGEBIETE (Int. Cl.4)** <br><br> G 11 B |
| A | IEEE TRANSACTIONS ON ELECTRONIC COMPUTERS, Band EC-12, Nr. 4, August 1963, Seiten 383-387, New York, US; L.F. SHEW: "Discrete tracks for saturation magnetic recording" <br> * Seite 384, rechte Spalte, Zeile 40 - Seite 385, linke Spalte, Zeile 40; Figur 3 * <br> --- | 3 | |
| A | EP-A-0 101 352 (VERTIMAG SYSTEMS CORP.) <br> ---       -/- | | |

Der vorliegende Recherchenbericht wurde für alle Patentansprüche erstellt

| Recherchenort | Abschlußdatum der Recherche | Prüfer |
|---|---|---|
| DEN HAAG | 11-01-1989 | FUX J. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 321 641  (LEE) <br> --- | | |
| A | EP-A-0 012 913  (IBM. CORP.) <br> ----- | | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 11-01-1989 | FUX J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)